# EUROPEAN PATENT APPLICATION

(11) **EP 3 202 482 A1**
(43) Date of publication of application: **09.08.2017**
(21) Application number: 16153915.0
(22) Date of filing: 02.02.2016
(51) Int. Cl.: B01D 46/24, B01D 45/12, B01D 46/00, B01D 50/00

(54) **A GAS DRYER FOR AN ELECTRIC MACHINE**

(71) Applicant: General Electric Technology GmbH, 5400 Baden (CH)
(72) Inventor: Sahoo, Rajani-Kanta, 5400 Baden (CH)
(74) Representative: General Electric Technology GmbH

(57) **Abstract**

The present disclosure relates to a gas dryer for an electric machine and the use of a gas dryer for a turbogenerator. It is an object of the invention to provide an appropriate gas supply with low maintenance for cooling an electric machine. Disclosed is a gas dryer in a cooling circuit for an electric machine, with at least an input channel to transport gas from the cooling circuit into the gas dryer, a cyclone separator to separate particles from the gas, a downstream filter comprising a coalescent material to dry the gas, and an output channel to feed the gas to the cooling circuit. Furthermore disclosed is the use of a corresponding gas dryer in a cooling circuit of a turbogenerator.

## Description

### TECHNICAL FIELD

The present disclosure relates to a gas dryer for an electric machine and the use of a gas dryer for a turbogenerator.

The electric machine is in particular a rotating electric machine such as a synchronous generator to be connected to a gas or steam turbine (turbogenerator) or a synchronous generator to be connected to a hydro turbine (hydro generator) or an asynchronous generator or a synchronous or asynchronous electric motor or also other types of electric machines.

### BACKGROUND

One aspect in operation of huge electric machines is cooling of the machine parts heating up due to high mechanical and electric exposure. Electric machines in high energy applications have cooling circuits in which cooling fluids or cooling gases circulate. In case of cooling gases commonly air or hydrogen is chosen to circulate in the cooling circuit to absorb heat. The cooling medium heated in the electric machine is transported through channels or ducts as part of the cooling circuit to a cooler device and after cooling back to the electric machine. When using gases as cooling medium it is necessary that the gas stays in a dry condition within the cooling circuit. This is regarding cooling performance and safety aspects. To this end the cooling gas is directed to a gas dryer which removes humidity from the gas. The state of the art describes several configurations of gas dryers. One gas dryer is provided with a chamber filled with a silica gel. The gas passes the silica gel and releases moisture to the silica gel. By these means the necessary dry condition of the cooling gas is created. The silica gel has to be replaced from time to time making this cooling system prone to costly maintenance. Moreover, next to the humidity the gas includes contaminations collecting in the gas during operation.

### SUMMARY

It is an object of the invention to provide an appropriate gas supply with low maintenance for cooling an electric machine. This object is solved with the features of a gas dryer and the use of a gas dryer according to the independent claims.

Further examples of the invention are described in the dependent claims.

In one example the cyclone separator of the gas dryer is arranged below the downstream filter. Thus, the gas flow is directed from below upwards. This arrangement facilitates the disposal of water and contaminations in the form of particles from the cooling gas. In this context in a further example a collecting vessel is connected to a separator compartment of the cyclone separator to collect particle waste and/or water waste from the cyclone separator in the separator compartment. Further, the collecting vessel has a drain to discharge the particle waste and/or water waste from the separator compartment and remove from the gas dryer.

In another example of the invention the water waste from the filter is collected at the ground of a filter compartment of the filter. The filter compartment has a drain to discharge this water waste collected at the ground from the filter compartment. The ground can be designed with a sloped face directed in the direction of the drain to create a water flow to the drain.

### BRIEF DESCRIPTION OF THE DRAWINGS

Further characteristics and advantages will be more apparent from the description of a preferred but non-exclusive embodiment of the gas dryer, illustrated by way of non-limiting example in the accompanying drawings, in which:
- Fig. 1: shows a schematic block diagram of an electric machine with a gas dryer according to an example of the invention, and a gas circuit connecting the electric machine with the gas dryer;
- Fig. 2: shows a schematic view of a gas dryer according to an example of the invention with an input channel to direct an inflow of wet gas into a cyclone separator to separate particles from the gas, a connecting channel to guide the gas into an upwardly arranged coalescent filter to dry the gas, and an output channel to discharge the gas to the electric machine.

### DETAILED DESCRIPTION OF EXEMPLARY EMBODIMENTS

With reference to the figures, these show schematic views of a gas dryer and a gas dryer connected via a gas circuit with an electric machine, wherein like reference numerals designate identical or corresponding parts throughout the several views.

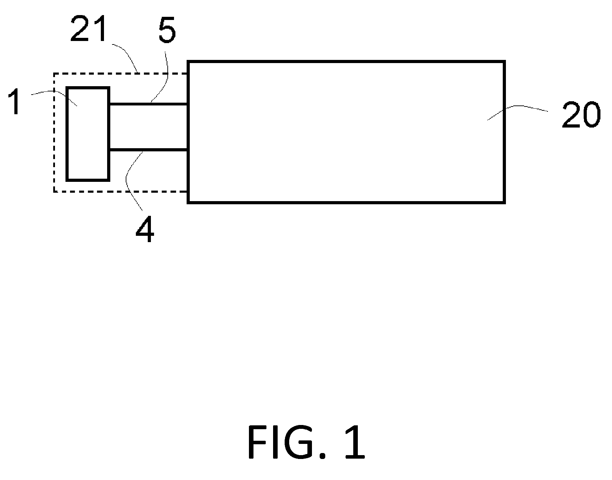

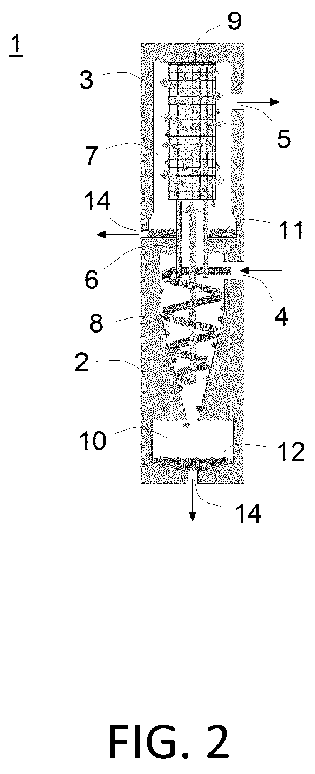

Fig. 1 shows a schematic block diagram of an electric machine 20 at the right. Here, the electric machine 20 is a generator driven by a turbine for high power generation. These types of high-end generators are commonly referred to as turbogenerators. Turbogenerators produce next to the generation of electricity heat, especially in the conductor bars. A cooling mechanism (not shown) for cooling the turbogenerator is therefore mandatory. The cooling medium is either a fluid, commonly water, or a gas, commonly air or hydrogen. In this disclosure the cooling by means of a gas is disclosed. The cooling gas must be kept in a dry condition and essentially free from contaminations. The cooling circuit of the electric machine 20 is connected to a gas circuit 21. The gas circuit 21 comprises an input channel 4 which transports and introduces the gas from the electric machine 20 into a gas dryer 1. The gas flows through the gas dryer 1 in which humidity and contaminations are removed from the gas. After conditioning the gas leaves the gas dryer 1 to an output channel 5. The output channel 5 transports the dried and cleaned gas back to the electric machine 20. Thus, the gas circuit 21 comprises the input channel 4, the gas dryer 1, and the output channel 5. The gas circuit 21 can be separated and connected to the cooling circuit, alternatively the gas circuit 21 can be integrated in the cooling circuit. The gas dryer 1 is designed in a closed loop system. The structure and function of the main parts of the gas circuit 21 is described in the following in detail with regard to Fig. 2.

Fig. 2 shows a schematic view of a gas dryer 1 according to an example of the invention. The gas from the electric machine 20 or the cooling circuit of the electric machine 20 enters the gas dryer 1 through an input channel 4. The input channel 4 is connected to an opening in a cyclone separator 2 which is part of the gas dryer 1. The gas inflow is shown schematically with an arrow directed to the compartment of the cyclone separator 2, the separator compartment 8. A substantial part of the cross-section of the separator compartment 8 is cone shaped with the cone top directed downwards, i.e. the diameter of the separator compartment 8 is lower at the bottom than above. In the separator compartment 8 the gas flow is whirled by jets. Typically, the cooling gas flow is shaped roughly to a cyclone, as shown in Fig. 2 by the spiral curve directed downwards. The gas is forced in the separator compartment 8 of the cyclone separator 2 to the bottom of the separator compartment 8. The whirled gas flow inside the separator compartment 8 causes water and in particular contaminations to fell at the inner wall of the separator compartment 8. Solid particles within the cooling gas flow are divided from the gas. Under the separator compartment 8 a collecting vessel 10 is connected to collect the separated water and particles. Flat inner walls of the separator compartment 8 and the cone shape facilitate the transport of the water and particles into the collecting vessel 10. From the collecting vessel 10 the water and particles are removed from via a drain 14 which connects the collecting vessel 10 with the outside. This removal is illustrated by the vertical arrow at the bottom in Fig. 2. The removal of the particle/water waste 12 from the gas reduces the contamination loading a downstream filter 9. The service lifetime of the filter 9 can be enhanced by these means. The gas flow is steered in the separator compartment 8 to an upward direction into a connecting channel 6 as illustrated by the upwardly directed arrow in the separator compartment 8. The connecting channel 6 interconnects the separator compartment 8 of the cyclone separator 2 with a filter compartment 7 of the filter 9. The connecting channel 6 projects substantially into the separator compartment 8 and discharges the gas directly to the filter 9. The filter 9 housed in a filter housing 3 is arranged above the cyclone separator 2 and has a similar breadth. The configuration of the gas dryer 1 is thus compact to fit to the electric machine 20 and associated equipment. The filter 9 is designed to filter out humidity or liquids from the inflowing gas. These liquids are water, vapours, aerosols, oil mists and/or condensates. The filter 9 dries the gas to condition the gas for further use as cooling gas in the electric machine 20. The filter 9 comprises a coalescent material through which the gas flows. The coalescent material causes the solved water in the gas to precipitate to water particles. The gas flow from the inside of the filter 9 to the outside of the filter 9 through the integrated coalescence material is illustrated by the bended arrows in Fig. 2. Precipitated water particles fall down in the separator compartment and collect at the ground to water waste. The separator compartment 8 has a drain 14 at the bottom to discharge the water waste 11 from the separator compartment 8. To facilitate the drain of water waste 11 the ground of the separator compartment 8 is flat and sloped to the drain 14. At one side the filter compartment 8 is connected to the output channel 5 as an exit for the dried and cleaned gas. The output channel 5 is illustrated by an arrow directed outwards the separator compartment 8. The conditioned gas is discharged and transported through the output channel 5 to the electric machine 20. The gas dryer 1 as disclosed forms a closed loop and omits commonly used heaters or blowers.

While the invention has been described in detail with reference to exemplary embodiments thereof, it will be apparent to one skilled in the art that various changes can be made, and equivalents employed, without departing from the scope of the invention. The foregoing description of the preferred embodiments of the invention has been presented for purposes of illustration and description. It is not intended to be exhaustive or to limit the invention to the precise form disclosed, and modifications and variations are possible in light of the above teachings or may be acquired from practice of the invention. The embodiments were chosen and described in order to explain the principles of the invention and its practical application to enable one skilled in the art to utilize the invention in various embodiments as are suited to the particular use contemplated. It is intended that the scope of the invention be defined by the claims appended hereto, and their equivalents.

### REFERENCE NUMBERS

- 1: gas dryer
- 2: cyclone separator
- 3: filter housing
- 4: input channel
- 5: output channel
- 6: connecting channel
- 7: filter compartment
- 8: separator compartment
- 9: filter
- 10: collecting vessel
- 11: water waste
- 12: particle/water waste
- 14: drain
- 20: electric machine
- 21: gas circuit

## Claims

1. A gas dryer (1) in a cooling circuit (21) for an electric machine (20), with at least an input channel (4) to transport gas from the cooling circuit (21) into the gas dryer (1), a cyclone separator (8) to separate particles from the gas, a downstream filter (9) comprising a coalescent material to dry the gas, and an output channel (5) to feed the gas to the cooling circuit (21).

2. The gas dryer (1) according to claim 1, **characterized in that** the cyclone separator (8) is arranged below the downstream filter (9).

3. The gas dryer (1) according to claim 1, **characterized in that** a collecting vessel (10) is connected to a separator compartment (8) of the cyclone separator (2) to collect particle/water waste (12) from the cyclone separator (8), and the collecting vessel (10) has a drain (14) to discharge the particle/water waste (12) from the separator compartment (8).

4. The gas dryer (1) according to claim 1, **characterized in that** water waste (11) from the filter (9) is collected at the ground of a filter compartment (7) of the filter (9), and the filter compartment (7) has a drain (14) to discharge the water waste (11) from the filter compartment (7).

5. Use of a gas dryer (1) according to claim 1 in a cooling circuit (21) of a turbogenerator.
